# EUROPEAN PATENT SPECIFICATION

(11) **EP 2 189 331 B1**
(45) Date of publication and mention of the grant of the patent: **14.12.2011**
(21) Application number: 09176614.7
(22) Date of filing: 20.11.2009
(51) Int. Cl.: B60N 2/60

(54) **Seat cover for vehicle repair shop**
Sitzbezug für Autowerkstatt
Housse de siège pour atelier de réparation de véhicules

(30) Priority: 24.11.2008 IT CR20080025
(43) Date of publication of application: 26.05.2010
(73) Proprietor: A & B SAS, 26048 Sospiro (CR) (IT)
(72) Inventor: Federici, Davide, 26048, SOSPIRO (CR) (IT)
(74) Representative: Marcio', Paola

(56) References cited:
- EP-A- 0 230 225
- EP-A- 0 457 992
- WO-A-98/29275
- WO-A-02/062186
- DE-A1- 3 419 728
- DE-C1- 4 132 714
- US-A1- 2009 148 630

## Description

The invention relates to the sector of accessories for performing maintenance and service operations on vehicles in a vehicle repair shop or in other environments pertaining to these vehicles. More in detail, the invention relates to a seat cover, also called seat protector, to protect the front seats of vehicles undergoing repair, maintenance and tests operations both in the workshop and in other places or environments for performing operations or simply for display. This seat cover has the task of allowing the mechanic, the user or the driver in general to sit on the seat without the risk of soiling or damaging, with ordinary clothing, with work clothes or tools, the fabric or the prestigious material with which the seats of the vehicle are upholstered.

DE 41 32 714 discloses a seat cover to protect the front seats of vehicles. WO 98/29725A1 discloses a seat cover obtained starting from a plastic sheet in the form of a tubular strip having at least one fold line.

According to prior art, seat covers used to protect the upholstery material of the front seats of vehicles are generally made of polyethylene film, are shaped like a bag with variable dimensions and as a rule approximately 70x160 cm, and have a longitudinal cut that involves the median portion of the rear face only, but not for the entire length thereof. The cut allows the seat cover, after tearing the short remaining section joining the two portions of the rear face closest to the open side of the bag, to be fitted like a hood over the seat of vehicles, so as to cover the backrest, the headrest and the sides thereof. Normally, seat covers are produced in a single tubular strip approximately 70 cm in width, or by longitudinal welding of a folded sheet. Pairs of respective transverse weld lines and predefined tear lines are produced along the tubular sleeve at intervals corresponding to each module of approximately 160 cm in length, to allow the bottom of the bag to be created and to facilitate separation of the single seat covers from the rest of the tubular strip.

The tubular strip of Polyethylene therefore comprises a plurality of seat covers, and is wound around a cardboard or plastic tube so as to form a roll of about 70-80 cm in height, with a diameter of approximately 15-20 cm.

These rolls have some limits or drawbacks:
- they are cumbersome when they are wall hung using a specific horizontal roll-holder making it necessary to leave the part of the wall below empty; when they are maintained in vertical position to reduce the space occupied they are in any case difficult to unroll;
- they are heavy and unwieldy;
- the central tube represents a waste product to be disposed of when the roll of seat covers has been consumed.

The aim of the invention is to overcome these limits and drawbacks. The object is achieved with a seat cover to protect the front seats of vehicles undergoing repair, maintenance and test operations obtainable by separating single elements suitable for use from a tubular strip provided with pairs of respective transverse weld and predefined tear lines and a longitudinal discontinuous cut line, which involves the median portion of only one face of said elements, wherein said tubular strip comprises at least one fold line longitudinally arranged to form flaps less wide than said tubular strip, characterised in that said flaps are folded over themselves along said at least one fold line to form a folded strip and said folded strip is wound around itself to form a roll without a core, of a width equivalent to that of one of said flaps. Advantageously, the tubular strip can comprise two parallel fold lines longitudinally arranged to form three flaps foldable over themselves in the form of a Z.

Analogously the tubular strip can comprise two fold lines longitudinally arranged to form three flaps foldable over themselves in the form of a C, a G or according to prior art.

According to needs, said flaps can be of the same or of different widths to one another.

According to a further embodiment of the invention, the tubular strip can comprise three or more fold lines longitudinally arranged to form four or more flaps foldable over themselves in a bellows fashion.

The invention has numerous advantages: the roll obtained from the folded strip is less cumbersome and more ergonomic than rolls currently in use, it is easier to handle, it has no final waste products to be disposed of and it can be hung in a horizontal position to facilitate tearing of the single seat covers.

The advantages of the invention shall be more evident below, wherein a preferred embodiment is described, by way of non limiting example and with the aid of the figures, where:
Fig. 1 represents, in a perspective view, a roll in which the tubular strip made by the single seat covers is divided into three folded flaps and is rolled around itself according to the invention;
Fig. 2 represents, in a top view, a portion of tubular strip unrolled and laid out;
Fig. 3 represents, in a perspective view, a seat cover obtained from the folded and rolled up tubular strip according to the invention, open in the position for use;
Fig. 4 shows a variant of the roll of Fig. 1 not belonging to the invention comprising a central support core.

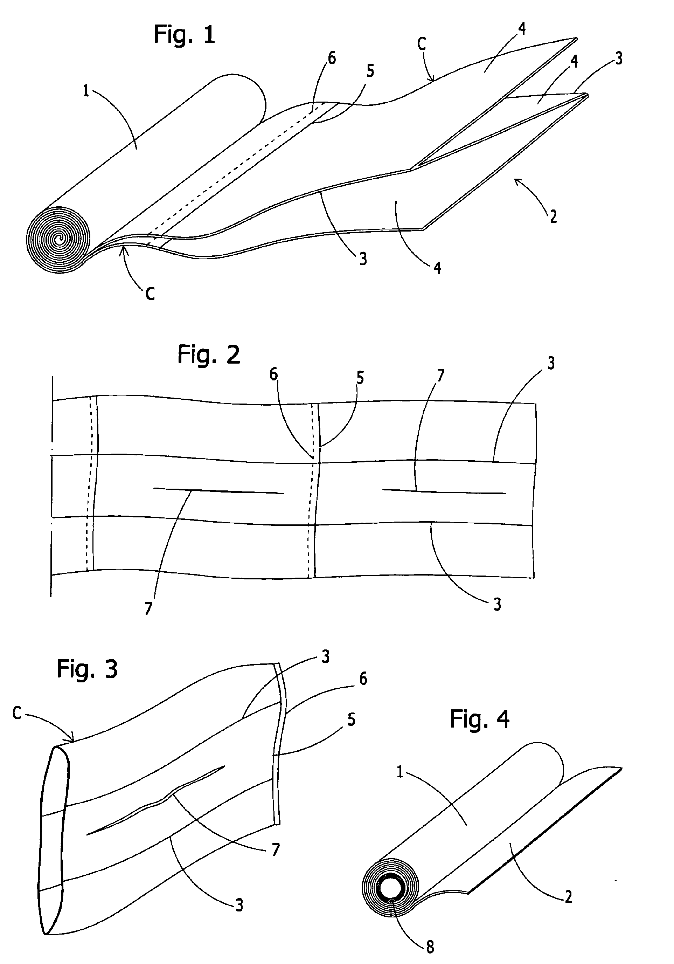

With reference to Fig. 1, it shows a roll 1 made by a tubular strip 2 with parallel and longitudinal fold lines 3 which divide it into flaps 4 which width is equivalent to a fraction of that of the tubular strip 2. The flaps are foldable over themselves according to a shape in the form of a Z so that the width of the roll 1 is equivalent to that of the single flaps 4.

The tubular strip 2 can be manufactured by continuous extrusion of a closed tube in the form of an endless sleeve, or produced in the form of a film folded and subsequently welded in longitudinal direction. Along said tubular strip, at regular intervals, transverse weld lines 5 associated with transverse tear lines 6 are arranged, produced according to prior art, to allow production of the bottom of the bag and division of the strip into single functional elements C forming the seat cover.

The material used to produce the tubular strip is of known type and belongs to the family of the polyolefins, such as PELD, PEHD, PELLD, PEMLLD, PP, etc., in virgin or regenerated version.

The flaps 4 can be of various width and differently folded, for example in the form of a C, G, M, etc., according to prior art.

With reference to Fig. 2, this shows a discontinuous longitudinal cut line 7 which involves the median portion of only one of the two faces of the seat cover C, the rear one, so that it does not stretch to the ends of the seat cover. This cut line 7 allows the seat cover, after tearing of the short remaining joining section between the two portions of the rear face closest to the open side of the bag, to be fitted like a hood over the seat of vehicles, so as to cover the backrest, the headrest and the sides thereof.

With reference to Fig. 3, this shows a seat cover C shaped like a bag open in the use position, with the cut 7 that identifies the openable passage to allow the seat cover to be fitted more effectively over the seat.

As it is evident to those skilled in the art, the invention has been described by way of example with reference to a tubular strip divided into three flaps foldable over themselves by means of two longitudinal fold lines, but it could also be provided with a single longitudinal fold line or with three or more fold lines of the flaps which, in this case, can have different widths and be folded over themselves to form a bellows or other shape according to prior art, always achieving the advantages set forth hereinbefore.

## Claims

1. Seat cover to protect the front seats of vehicles undergoing repair, maintenance and test operations obtainable by separating single elements (C) suitable for use from a tubular strip (2) provided with pairs of respective transverse weld (5) and predefined tear (6) lines and a longitudinal discontinuous cut line (7) which involves the median portion of only one face of said elements (C), wherein said tubular strip (2) comprises at least one fold line (3) longitudinally arranged to form flaps (4) less wide than said tubular strip (2), **characterised in that** said flaps (4) are folded over themselves along said at least one fold line (3) to form a folded strip and said folded strip is wound around itself to form a roll (1) without a core, of a width equivalent to that of one of said flaps (4).

2. Seat cover according to claim 1, **characterized in that** said tubular strip (2) comprises two parallel fold lines (3) longitudinally arranged to form three flaps (4).

3. Seat cover according to claim 2, **characterized in that** said flaps (4) can be folded over themselves in the form of a Z, C, G.

4. Seat cover according to claim 1, **characterized in that** said tubular strip (2) comprises three or more parallel fold lines (3) longitudinally arranged to form four or more flaps (4).

5. Seat cover according to claim 4, **characterized in that** said flaps (4) can be folded over themselves in a bellows fashion, in the form of an M, N, W.

## Patentansprüche

1. Sitzbezug, um die Vordersitze von Fahrzeugen, die Reparaturen, Instandsetzungen und Probebetrieben unterzogen werden, zu schützen, erhältlich durch das Abtrennen einzelner Elemente (C), geeignet für die Benutzung ausgehend von einem röhrenförmigen Band (2), versehen mit Paaren von jeweilig querverlaufenden Nähten (5) und vorgegebenen Reißlinien (6) und einer längsverlaufenden diskontinuierlichen Schnittlinie (7), die den mittleren Teil von nur einer Seite der besagten Elemente (C) einbezieht, wobei besagtes röhrenförmiges Band (2) mindestens eine Faltlinie (3) umfasst, die in Längsrichtung angeordnet ist, so dass sie Falten (4) bildet, die weniger breit sind als das besagte röhrenförmige Band (2), **gekennzeichnet dadurch, dass** besagte Falten (4) längs der besagten mindestens einen Faltlinie über sich selbst gefaltet werden (3), so dass sie ein gefaltetes Band bilden, und das besagte gefaltete Band wird rund um sich selbst gewickelt, so dass es eine Rolle (1) ohne Kern von einer Breite bildet, die gleichgroß ist wie die von einer der besagten Falten (4).

2. Sitzbezug nach Anspruch 1, **gekennzeichnet dadurch, dass** das besagte röhrenförmige Band (2) zwei parallel verlaufende Faltlinien (3) umfasst, die in Längsrichtung angeordnet sind und drei Falten (4) bilden.

3. Sitzbezug nach Anspruch 2, **gekennzeichnet dadurch, dass** besagte Falten (4) über sich selbst in Form eines Z, C, G gefaltet werden können.

4. Sitzbezug nach Anspruch 1, **gekennzeichnet dadurch, dass** das besagte röhrenförmige Band (2) drei oder mehr parallel verlaufende Faltlinien (3) umfasst, die in Längsrichtung angeordnet sind und vier oder mehr Falten (4) bilden.

5. Sitzbezug nach Anspruch 4, **gekennzeichnet dadurch, dass** besagte Falten (4) über sich selbst nach Art eines Blasebalgs in Form eines M, N, W gefaltet werden können.

## Revendications

1. Housse de siège pour protéger les sièges avant des véhicules subissant des opérations de réparation, d'entretien et de test, pouvant être obtenu en séparant des éléments individuels (C) adaptés à l'utilisation à partir d'une bande tubulaire (2) dotée de paires de soudures transversales respectives (5) et de lignes de découpage préétablies (6) et d'une ligne de coupe longitudinale discontinue (7) qui implique la portion médiane d'une seule face desdits éléments (C), où ladite bande tubulaire (2) comprend au moins une ligne de pliage (3) disposée longitudinalement pour former des volets (4) moins larges que ladite bande tubulaire (2), **caractérisée par le fait que** lesdits volets (4) sont repliés sur eux-mêmes le long de ladite au moins une ligne de pliage (3) pour former une bande pliée et ladite bande pliée est enroulée sur elle-même pour former un rouleau (1) sans noyau, d'une largeur équivalente à celle de l'un desdits volets (4).

2. Housse de siège selon la revendication 1, **caractérisée par le fait que** ladite bande tubulaire (2) comprend deux lignes de pliage (3) parallèles, disposées longitudinalement pour former trois volets (4).

3. Housse de siège selon la revendication 2, **caractérisée par le fait que** lesdits volets (4) peuvent être repliés sur eux-mêmes sous la forme d'un Z, C, G.

4. Housse de siège selon la revendication 1, **caractérisée par le fait que** ladite bande tubulaire (2) comprend au moins trois lignes de pliage (3) parallèles, disposées longitudinalement pour former au moins quatre volets (4).

5. Housse de siège selon la revendication 4, **caractérisée par le fait que** lesdits volets (4) peuvent être repliés sur eux-mêmes tel un soufflet, sous la forme d'un M, N, W.
